# EUROPÄISCHE PATENTANMELDUNG

(11) **EP 2 985 582 A1**
(43) Veröffentlichungstag der Anmeldung: **17.02.2016**
(21) Anmeldenummer: 14180803.0
(22) Anmeldetag: 13.08.2014
(51) Int. Cl.: G01M 7/02, G01M 7/04, G01M 99/00, G01N 3/32

(54) **Prüfvorrichtung und Prüfverfahren zum Ermitteln einer Materialermüdung sowie Schaufelklauenprüfkörper**

(71) Anmelder: Siemens Aktiengesellschaft, 80333 München (DE)
(72) Erfinder: Becs, Balazs Janos, 45468 Mülheim an der Ruhr (DE); Flegler, Johan, 45131 Essen (DE); Lückemeyer, Nils, 45470 Mülheim an der Ruhr (DE); Sheng, Shilun, 46149 Oberhausen (DE); Sürken, Norbert, 45468 Mülheim a.d. Ruhr (DE)

(57) **Zusammenfassung**

Die Erfindung betrifft eine Prüfvorrichtung (1) zum Ermitteln einer Materialermüdung bezüglich rotorseitiger Schaufelklauenteile (3) zum Festlegen eines Schaufelfußes (4) einer Turbinenschaufel (5) mit einer Versuchsanordnung (10), welche eine Halteeinrichtung (11) zum Haltern eines Schaufelklauenprüfkörpers (12) mit einem rotorseitigen Schaufelklauenteil (13), und Mittel (20) zum Simulieren eines Schaufelfußes (4) einer Turbinenschaufel (5) umfasst, und mit Mitteln (35) zum Erzeugen von simulierten Betriebsbelastungen (36, 37, 38), wobei die Mittel (35) zum Erzeugen von simulierten Betriebsbelastungen (36, 37, 38) mit der Halteeinrichtung (11) zum Haltern des Schaufelklauenprüfkörpers (12) derart wirkverbunden sind, dass die erzeugten simulierten Betriebsbelastungen (36, 37, 38) mittels der Halteeinrichtung (11) unter Umgehung der Mittel (20) zum Simulieren des Schaufelfußes (4) in die Versuchsanordnung (10) einleitbar sind.

## Beschreibung

Die Erfindung betrifft eine Prüfvorrichtung zum Ermitteln einer Materialermüdung bezüglich rotorseitiger Schaufelklauenteile zum Festlegen eines Schaufelfußes einer Turbinenschaufel mit einer Versuchsanordnung, welche eine Halteeinrichtung zum Haltern eines Schaufelklauenprüfkörpers mit einem rotorseitigen Schaufelklauenteil, und welche Mittel zum Simulieren eines Schaufelfußes einer Turbinenschaufel umfasst, und mit Mitteln zum Erzeugen von simulierten Betriebsbelastungen.

Die Erfindung betrifft auch einen Schaufelklauenprüfkörper mit einem Schaufelklauenteil und mit einem Befestigungsteil zum Befestigen an einer Halteeinrichtung einer Versuchsanordnung einer Prüfvorrichtung zum Ermitteln einer Materialermüdung.

Die Erfindung betrifft des Weiteren ein Prüfverfahren zum Ermitteln einer Materialermüdung bezüglich rotorseitiger Schaufelklauenteile zum Festlegen eines Schaufelfußes einer Turbinenschaufel, bei welchem eine Versuchsanordnung bestehend aus einer Halteeinrichtung zum Haltern eines Schaufelklauenprüfkörpers mit wenigstens einem rotorseitigen Schaufelklauenteil, und bestehend aus Mitteln zum Simulieren eines Schaufelfußes einer Turbinenschaufel mit simulierten Betriebsbelastungen beaufschlagt wird.

Bei Strömungsmaschinen, insbesondere bei Strömungsturbomaschinen, mit umlaufenden durch Schaufelelemente bestückten Rotorenteilen stellt die Anbindung solcher Schaufelelemente an ein derartiges Rotorteil aufgrund von unterschiedlichen Betriebs- und Belastungsbedingungen eine besondere Herausforderung dar. Auch deswegen, weil diesbezügliche Anbindungsbauteile über die Betriebsdauer der Strömungsmaschine insbesondere einer zeitlich veränderlichen und komplexen Beanspruchung unterliegen. Beispielsweise die Entstehung von Wärmespannungen und Fliehkräften in den Anbindungsbauteilen speziell bei Start- und Stoppvorgängen von Strömungsmaschinen können unter anderem niederfrequente Beanspruchungen mit einer hohen Amplitude verursachen, welche zu einer niederzyklischen Materialermüdung (Low-cycle-fatigue, kurz LCF) insbesondere an den Anbindungsbauteilen führen können. Speziell aufgrund weiter gestiegener Leistungsanforderungen an derartige Strömungsmaschinen ist im Vorfeld eines Einsatzes eine verbesserte Beschreibung insbesondere eines lokalen Werkstoffversagens an einem besonders kritischen formschlüssigen Verbindungsbereich der Anbindungsbauteile insbesondere zwischen einem tannenbaumförmig ausgestalteten Schaufelfuß und einer diesbezüglichen mit entsprechend geformten Schaufelklauenteilen ausgestaltete Schaufelfußaufnahme erforderlich. Eine gute Beschreibung des lokalen Werkstoffversagens kann durch Versuche an Original-Bauteilen erzielt werden, da hierdurch einerseits das entwickelte Beschreibungskonzept validiert und andererseits höchstbeanspruchte Bereiche präzise identifiziert werden können. Insbesondere der Bereich eines diesbezüglichen Schaufelklauenteils ist an einem umlaufenden Rotorteil einer Turbine, speziell einer Dampfturbine und insbesondere einer Niederdruckdampfturbine besonders gefährdet. Aus dem Stand der Technik sind des Weiteren Vorrichtungen sowie Verfahren bekannt, mittels welchen insbesondere eine LCF-Lebensdauer von Schaufelklauenteilen zum Festlegen eines Schaufelfußes einer Turbinenschaufel an einem Rotorteil einer Strömungsmaschine auf Basis von Werkstoffdaten von Kleinproben ermittelt werden kann. Zur Validierung kommen darüber hinaus Versuche an bauteilähnlichen Proben zum Einsatz. Ferner können für kleinere Schaufelklauenteile Versuche an durch Schaufelklauenteile ausgerüsteten Rotorsegmenten durchgeführt werden. Dabei wird ein diesbezügliches Rotorsegment fest eingespannt. Anschließend wird eine gewünschte LCF-Betriebsbelastung simuliert in einen durch zwei Schaufelklauenteile festgelegten Schaufelfuß eingeleitet. Für größere Schaufelklauen sind dafür Großprüfmaschinen mit einer entsprechend hohen Prüfkraft erforderlich. Dabei kann eine reale Spannungsverteilung in der Schaufelklaue unter Betriebsbedingung (Fliehkraft) aufgrund einer fehlenden Tangentialbelastung jedoch nicht korrekt wiedergegeben werden. Weiterhin wird die Spannungsverteilung wegen einer unsymmetrischen Belastung bei einigen Testaufbauten oftmals nicht korrekt abgebildet.

Es ist Aufgabe der Erfindung, eine Methode mit einer Versuchsanordnung bereitzustellen, mittels welcher reelle Betriebsbelastungen realer simuliert, ermittelt und abgebildet werden können.

Die Aufgabe der Erfindung wird einerseits von einer Prüfvorrichtung zum Ermitteln einer Materialermüdung bezüglich rotorseitiger Schaufelklauenteile zum Festlegen eines Schaufelfußes einer Turbinenschaufel mit einer Versuchsanordnung gelöst, welche eine Halteeinrichtung zum Haltern eines Schaufelklauenprüfkörpers mit einem rotorseitigen Schaufelklauenteil, und welche Mittel zum Simulieren eines Schaufelfußes einer Turbinenschaufel umfasst, und mit Mitteln zum Erzeugen von simulierten Betriebsbelastungen, wobei die Mittel zum Erzeugen von simulierten Betriebsbelastungen mit der Halteeinrichtung zum Haltern des Schaufelklauenprüfkörpers derart wirkverbunden sind, dass die erzeugten simulierten Betriebsbelastungen mittels der Halteeinrichtung unter Umgehung der Mittel zum Simulieren des Schaufelfußes in die Versuchsanordnung einleitbar sind.

Dadurch, dass die Mittel zum Erzeugen von simulierten Betriebsbelastungen mit der Halteeinrichtung zum Haltern des Schaufelklauenprüfkörpers wirkverbunden sind, können selbst große Prüfkräfte zum Simulieren derartiger Betriebsbelastungen unmittelbarer in Bereiche des Schaufelklauenteils des Schaufelklauenprüfkörpers eingeleitet werden.

Die erfindungsgemäße Schaufelklauen-Prüfvorrichtung verfolgt hierbei eine vollständig neue Versuchsanordnung, indem die simulierten Betriebsbelastungen aufgrund der direkten Wirkverbindung zwischen der Halteeinrichtung und den Mitteln zum Erzeugen von Betriebsbelastungen quasi von der "Rotorseite" her in das Schaufelklauenteil eingeleitet werden.

Insofern kann die erfindungsgemäße Schaufelklauen-Prüfvorrichtung speziell auf groß bauende Designvarianten von Schaufelklauenteilen angewendet werden.

Der Begriff "Schaufelklauenteil" beschreibt im Sinne der Erfindung im Wesentlichen ein Flankenteil einer in einem Rotorteil ausgestalteten Schaufelfußaufnahme, welche der Aufnahme eines meist tannenbaumförmig ausgestalteten Schaufelfußes einer Turbinenschaufel dient. An einem derartigen Rotorteil begrenzt ein Flankenteil zwei unmittelbar nebeneinander liegende Schaufelfußaufnahmen, da diese Schaufelfußaufnahmen nebeneinander und alternierend mit den Schaufelklauenteilen in Umfangsrichtung des Rotorteils konzentrisch um dessen Rotationsachse herum angeordnet sind.

Derartige Schaufelklauenteile sind oftmals an Strömungsmaschinen mit einer Turbine, insbesondere einer Dampfturbine oder einer Niederdruckdampfturbine, verbaut, wobei diese Turbine wenigstens ein mit einer Rotorwelle umlaufendes Rotorteil umfasst, an welchem eine Vielzahl an Turbinenschaufeln mit ihren Schaufelfüßen in Schaufelfußaufnahmen mit entsprechend ausgestalteten Schaufelklauenteilen festgelegt sind, und wobei das Rotorteil eine Vielzahl an derartigen durch Schaufelklauenteile ausgeformten Schaufelfußaufnahmen aufweist.

Die Begrifflichkeit "Betriebsbelastungen" beschreibt vorliegend Belastungen, welche beispielsweise aufgrund von erzeugten Schwingungen, Lastwechseln, Start-/Stopp-Zyklen oder dergleichen an der Versuchsanordnung simuliert werden, um die an einer Strömungsmaschine vorherrschenden reellen Betriebsbedingungen möglichst präzise nachahmen zu können.

Die Begriffe "Strömungsmaschinen" oder "Strömungsturbomaschinen" umfassen im Sinne der Erfindung insbesondere Dampfturbinen und hierbei speziell Niederdruckdampfturbinen.

Die Aufgabe der Erfindung wird andererseits auch von einem Prüfverfahren zum Ermitteln einer Materialermüdung bezüglich rotorseitiger Schaufelklauenteile zum Festlegen eines Schaufelfußes einer Turbinenschaufel gelöst, bei welchem eine Versuchsanordnung bestehend aus einer Halteeinrichtung zum Haltern eines Schaufelklauenprüfkörpers mit einem rotorseitigen Schaufelklauenteil, und bestehend aus Mitteln zum Simulieren eines Schaufelfußes einer Turbinenschaufel mit simulierten Betriebsbelastungen beaufschlagt wird, wobei diese simulierten Betriebsbelastungen in die Halteeinrichtung zum Haltern des Schaufelklauenprüfkörpers unter Umgehung der Mittel zum Simulieren des Schaufelfußes unmittelbar eingeleitet werden.

Werden die simulierten Betriebsbelastungen über die Halteeinrichtung zum Haltern des Schaufelklauenprüfkörpers unmittelbar in das Schaufelklauenteil eingeleitet, können diese simulierten Betriebsbelastungen wesentlich effektiver und außerordentlich praxisnah bis in das Schaufelklauenteil übertragen werden.

Zum Einleiten bzw. Übertragen der simulierten Betriebsbelastungen in das Schaufelklauenteil wurde bisher der Umweg über einen simulierten Schaufelfuß gewählt, der gleichzeitig mit zwei Schaufelklauenteilen wechselwirkte, da dieser simulierte Schaufelfuß zwischen zwei unmittelbar benachbarten Schaufelklauenteile eingeklemmt war. Aufgrund unsymmetrischer Belastungen kann die reale Spannungsverteilung in der Regel nicht korrekt abgebildet werden.

Dies ist bei vorliegender Prüfvorrichtung und bei vorliegendem Prüfverfahren nicht mehr der Fall, da die erzeugten simulierten Betriebsbelastungen nicht mehr mittelbar über einen simulierten Schaufelfuß in das Schaufelklauenteil des Schaufelklauenprüfkörpers sondern erfindungsgemäß unmittelbar über die Halteeinrichtung des Schaufelklauenprüfkörpers in das Schaufelklauenteil eingeleitet werden. Hierdurch wird das Schaufelklauenteil durch die gesamten erzeugten simulierten Betriebsbelastungen belastet.

Eine bevorzugte Ausführungsvariante sieht vor, dass die Mittel zum Einleiten von simulierten Betriebsbelastungen mit der Halteeinrichtung zum Haltern des Schaufelklauenprüfkörpers derart wirkverbunden sind, dass die erzeugten simulierten Betriebsbelastungen mittels der Halteeinrichtung unter Umgehung der Mittel zum Simulieren des Schaufelfußes unmittelbar in das rotorseitige Schaufelklauenteil einleitbar sind. Hierdurch können die erzeugten simulierten Betriebsbelastungen wesentlich effektiver bis in das Schaufelklauenteil übertragen werden, wie vorstehend bereits beschrieben.

Darüber hinaus ist es vorteilhaft, wenn die Mittel zum Erzeugen von simulierten Betriebsbelastungen eine Einrichtung zum Erzeugen von LCF-Betriebsbelastungen umfassen. Speziell eine niederzyklische Materialermüdung bzw. LCF-Materialermüdung ist an gattungsgemäßen Anbindungsbauteilen häufig sehr problematisch.

Kumulativ oder alternativ können die Mittel zum Erzeugen von simulierten Betriebsbelastungen eine Einrichtung zum Erzeugen von HCF-Betriebsbelastungen umfassen. Auch das Simulieren einer Langzeitermüdung (High-cycle-fatigue, kurz HCF) ist vorteilhaft.

Ferner ist es vorteilhaft, wenn die Mittel zum Erzeugen von simulierten Betriebsbelastungen kumulativ oder alternativ eine Einrichtung zum Erzeugen von SCC-Betriebsbelastungen umfassen. Durch die Simulierung einer Spannungsrisskorrosion (stress corrosion cracking, kurz SCC) kann ein entsprechend ausgestaltetes Prüfverfahren nochmals verbessert werden.

Umfassen die Mittel zum Erzeugen von simulierten Betriebsbelastungen zudem eine Einrichtung zum Erzeugen von TMF-Be-triebsbelastungen, kann das Prüfungsverfahren weiter verbessert werden, da hierdurch auch eine thermo-mechanische Ermüdung (thermo-mechanical fatigue, kurz TMF) simuliert werden kann.

Auch wenn die Mittel zum Erzeugen von simulierten Betriebsbelastungen zusätzlich oder alternativ noch eine Einrichtung zum Erzeugen von Kriechermüdungs-Betriebsbelastungen umfassen, kann ein durchzuführendes Prüfverfahren nochmals verfeinert werden.

Es versteht sich, dass die Mittel zum Erzeugen von simulierten Betriebsbelastungen unterschiedlich realisiert sein können. Beispielsweise umfassen sie einen Elektromotor, mittels welchem entsprechende Schwingungsanregungen oder dergleichen erzeugt werden können, welche dann auf die Halteeinrichtung unmittelbar übertragen werden.

So sieht eine diesbezüglich erwähnenswerte Verfahrensvariante auch vor, dass in die Halteeinrichtung zum Haltern des Schaufelklauenprüfkörpers bzw. des Rotorsegments simulierte LCF, HCF, SCC, TMF und/oder Kriechermüdungs-Betriebsbelastungen eingeleitet werden, um diesbezügliche Lebensdauern von rotorseitigen Schaufelklauenteilen zu ermitteln.

Ein besonderes Augenmerk auf eine Prüfung größerer Niederdruckturbinenklauen insbesondere unter LCF-Belastungen kann dann gelegt werden, wenn vorliegend die Materialermüdung an einem Niederdruck-Schaufelklauenteil einer Niederdruckturbine ermittelt wird.

Das vorliegende Prüfverfahren kann vorteilhaft weitergebildet werden, wenn die Materialermüdung mittels unterschiedlicher Umgebungsmedien und/oder mittels unterschiedlicher Prüftemperaturen hinsichtlich der Umgebungsmedien und/oder hinsichtlich des Schaufelklauenprüfkörpers ermittelt wird. Beispielsweise können die Simulationen mithilfe von Umgebungsmedien wie Luft, Wasser, Deionat oder dergleichen durchgeführt werden. Zusätzlich können unterschiedliche Temperaturen an dem jeweiligen Umgebungsmedium und/oder Prüfkörper vorgesehen werden. Hierdurch können noch differenziertere Prüfergebnisse realisiert werden.

Um das Schaufelklauenteil durch die Mittel zum Simulieren eines Schaufelfußes konstruktiv einfach packen zu können, ist es vorteilhaft, wenn die Mittel zum Simulieren eines Schaufelfußes eine Spanneinrichtung zum beidseitigen Einspannen des an dem Schaufelklauenprüfkörpers ausgebildeten rotorseitigen Schaufelklauenteils aufweisen. Die Spanneinrichtung imitiert hierbei bevorzugt eine Schaufelfußgeometrie.

Bevorzugt weist die Spanneinrichtung einen zumindest teilweise zu einer Schaufelklauenteilgeometrie komplementär ausgestalten Aufnahmeraum mit einer zu einem tannenbaumartig ausgestalteten Schaufelfuß komplementären Verzahnung auf, wodurch das Schaufelklauenteil formschlüssig besonders innig an den Mitteln zum Simulieren des Schaufelfußes festgelegt werden kann.

Ein Prüfablauf kann weiter vereinfacht gestaltet werden, wenn die Spanneinrichtung zwei verlagerbare Spannbacken zum Einspannen des rotorseitigen Schaufelklauenteils aus zwei aufeinander zuweisenden Richtungen aufweist. Hierdurch kann das Schaufelklauenteil baulich einfach umgriffen und so sicher ortsfest in der Versuchsanordnung festgelegt werden.

Die zwei Spannbacken können das Schaufelklauenteil besonders unkompliziert und betriebssicher packen und klemmen, wenn die zwei Spannbacken in einer Spannbackenhalterung verlagerbar angeordnet sind. Beispielsweise umfasst die Spannbackenhalterung zwei Linearführungsbahnen. Eine einfache Klemmung kann erzielt werden, wenn die Spannbackenhalterung zwei konisch zueinander verlaufende Spannbackenverlagerungswege ausgestaltet. Zum Beispiel verlaufen die zwei Linearführungsbahnen hierzu in einer gemeinsamen Verlagerungsebene schräg zueinander.

Sind die zwei Spannbacken mit einer axial zur Halteeinrichtung verlaufenden Verlagerungskomponente in der Spanneinrichtung angeordnet, können die zwei Spannbacken dem Schaufelklauenteil auch mit einer axialen Richtungskomponente zugestellt werden, wodurch die Spanneinrichtung hinsichtlich ihrer Breite kompakter bauen kann.

Es versteht sich, dass die vorliegenden Spannbacken unterschiedlich ausgebildet sein können.

Die Spannbacken sind vorliegend bevorzugt aus mindestens zwei voneinander trennbaren Bauteilen hergestellt. Alternativ können Spannbacken zu einer entsprechenden Schaufelfußgeometrie integral, also einteilig, gefertigt sein.

Die Spannbacken können darüber hinaus mit oder ohne Zahnelemente zum Wechselwirken mit dem Schaufelklauenteil des Schaufelklauenprüfkörpers realisiert sein.

Die Aufgabe der Erfindung wird des Weiteren auch von einem Schaufelklauenprüfkörper mit einem Schaufelklauenteil und mit einem Befestigungsteil zum Befestigen an einer Halteeinrichtung einer Versuchsanordnung einer Prüfvorrichtung zum Ermitteln einer Materialermüdung gelöst, wobei das Schaufelklauenteil derart an dem Schaufelklauenprüfkörper angeordnet ist, dass das Schaufelklauenteil von einer Spanneinrichtung der Prüfvorrichtung umgreifbar ist.

Aufgrund der einfachen Geometrie des Schaufelklauenprüfkörpers können die Fertigungskosten im Zusammenhang mit der vorliegenden erfindungsgemäßen Prüfvorrichtung vorteilhaft reduziert werden.

Nicht nur aus diesem Grund findet der vorliegende Schaufelklauenprüfkörper vorteilhaft Verwendung an der hier beschriebenen Prüfvorrichtung.

Das Schaufelklauenteil ist vorliegend vorzugsweise 1:1 gemäß der originalen Schaufelklauenteile ausgestaltet, so dass reelle Belastungszustände besonders präzise simuliert werden können.

Mittels der vorliegenden Erfindung ist eine Qualifizierung der Herstellungsverfahren sowie der Oberflächenverfestigung der Schaufelklauenteile hinsichtlich der LCF-, HCF-, SCC-, TMF- und/oder Kriechermüdungs-Lebensdauer oder ähnlichem unter realen Bedingungen möglich.

Darüber hinaus wird vorliegend ein leichterer Zugang zu FEM-Analysen ermöglicht.

Ferner sind weitere Ergänzungen bei dieser Versuchsanordnung konstruktiv und verfahrenstechnisch leicht verwirklichbar, wie zum Beispiel simulierte Betriebsbelastungen mit Tangentialbelastungen oder dergleichen.

Weitere Merkmale, Effekte und Vorteile vorliegender Erfindung werden anhand anliegender Zeichnung und nachfolgender Beschreibung erläutert, in welchen beispielhaft eine erfindungsgemäße Schaufelklauen-Prüfvorrichtung mit zwei alternativen Versuchsanordnungen dargestellt und beschrieben ist. Komponenten, welche in den einzelnen Figuren wenigstens im Wesentlichen hinsichtlich ihrer Funktion übereinstimmen, können hierbei mit gleichen Bezugszeichen gekennzeichnet sein, wobei die Komponenten nicht in allen Figuren beziffert und erläutert sein müssen.

In der Zeichnung zeigen:
- Figur 1: schematisch eine erste Ansicht einer Schaufelklauen-Prüfvorrichtung mit Mitteln zum Erzeugen von simulierten Betriebsbelastungen, welche unmittelbar mit einer Halteeinrichtung zum Haltern eines Schaufelklauenprüfkörpers wirkverbunden sind;
- Figur 2: schematisch eine Teilansicht eines Rotorteils einer Niederdruckturbine mit einer Vielzahl an Schaufeln, die an dem Rotorteil gehaltert sind;
- Figur 3: schematisch eine Aufsicht auf Schaufelklauen; und
- Figur 4: schematisch die Schaufelklauen-Prüfvorrichtung aus der Figur 1 mit einer alternativ ausgestalteten Spanneinrichtung.

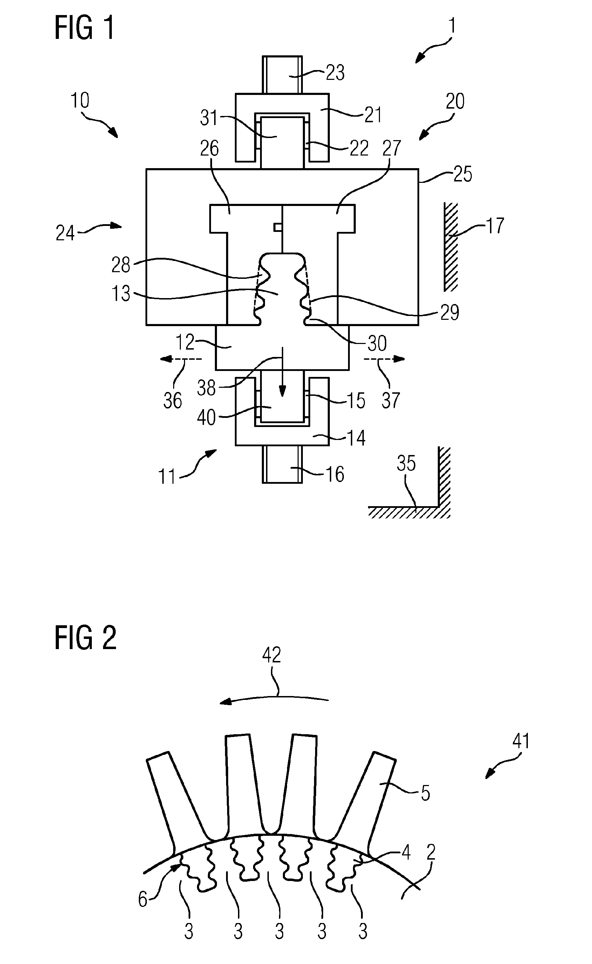

Die gemäß eines ersten Ausführungsbeispiels in der Figur 1 gezeigte Prüfvorrichtung 1 zum Ermitteln einer Materialermüdung bezüglich an einem Rotorteil 2 (siehe beispielhaft Figur 2) angeordneten rotorseitigen Schaufelklauenteilen 3 zum Festlegen eines tannenbaumartigen Schaufelfußes 4 einer Turbinenschaufel 5 an einer an diesem Rotorteil 2 ausgebildeten Schaufelfußaufnahme 6 weist eine entsprechend ausgebildete Versuchsanordnung 10 auf.

Die Versuchsanordnung 10 umfasst eine Halteeinrichtung 11 zum Haltern eines Schaufelklauenprüfkörpers 12 mit wenigstens einem rotorseitigen Schaufelklauenteil 13. Das Schaufelklauenteil 13 ist hierbei 1:1 gemäß der originalen Schaufelklauenteile 3 ausgebildet. Diese Halteeinrichtung 11 besteht im Wesentlichen aus einem Haltegabelteil 14, in welchem ein Querbolzenteil 15 fest, aber lösbar gelagert ist. Das Haltegabelteil 14 ist mittels einer Haltestange 16 mittelbar in einem Gestell 17 der Prüfvorrichtung 1 gelagert.

Des Weiteren umfasst die Versuchsanordnung 10 noch Mittel 20 zum Simulieren eines Schaufelfußes 4 (siehe Figur 2) einer Turbinenschaufel 5 (siehe Figur 2). Die Mittel 20 zum Simulieren umfassen zum einen ein weiteres Haltegabelteil 21, in welchem ein weiteres Querbolzenteil 22 fest, aber lösbar gelagert ist. Das Haltegabelteil 21 ist mittels einer weiteren Haltestange 23 in dem Gestell 17 der Prüfvorrichtung 1 gelagert. Zum anderen umfassen diese Mittel 20 zum Simulieren noch eine Spanneinrichtung 24 zum beidseitigen Einspannen des an dem Schaufelklauenprüfkörper 12 ausgebildeten rotorseitigen Schaufelklauenteils 13. Die Spanneinrichtung 24 weist zwei in einer Spannbackenhalterung 25 gehaltene Spannbacken 26 und 27 auf, mittels welchen ein Aufnahmeraum 28 zum Aufnehmen des Schaufelklauenteils 13 des Schaufelklauenprüfkörpers 12 erzeugt ist. Das Schaufelklauenteil 13 kann hierbei kopfseitig in den Aufnahmeraum 28 mit einer Innenkontur 29, welche eine Teilverzahnung 30 bildet, eingeschoben werden. Die Spanneinrichtung 24 ist mittels einer Haltelasche 31 an dem weiteren Querbolzenteil 22 an dem Gestell 17 der Prüfvorrichtung 1 gelagert.

Die Prüfvorrichtung 1 weist des Weiteren Mittel 35 zum Erzeugen von simulierten Betriebsbelastungen in Form von Schwingungsanregungen 36, 37, 38 (nur beispielhaft eingezeichnet) oder dergleichen auf, wobei die Halteeinrichtung 11 mithilfe der Mittel 35 zum Erzeugen von simulierten Betriebsbelastungen mittelbar an dem Gestell 17 gelagert ist. Die Mittel 35 zum Erzeugen von simulierten Betriebsbelastungen insbesondere eine hier nicht weitergezeigte Einrichtung zum Erzeugen von LCF-Betriebsbelastungen umfasst. Hierdurch kann mittels der Prüfvorrichtung 1 insbesondere die LCF-Lebensdauer der rotorseitigen Schaufelklauenteile 3 ermittelt werden. Die Mittel 35 zum Erzeugen der simulierten Betriebsbelastungen sind mit der Halteeinrichtung 11 zum Haltern des Schaufelklauenprüfkörpers 12 derart wirkverbunden, dass die erzeugten simulierten Betriebsbelastungen mittels dieser Halteeinrichtung 11 einerseits in die Versuchsanordnung 10 und anderseits speziell in das Schaufelklauenteil 13 des Schaufelklauenprüfkörpers 12 unter Umgehung der Mittel 20 zum Simulieren unmittelbar einleitbar sind.

Hierbei zeichnet sich der Schaufelklauenprüfkörper 12 einerseits durch das Schaufelklauenteil 13 aus, wie vorstehend bereits erläutert. Darüber hinaus weist der Schaufelklauenprüfkörper 12 ein Befestigungsteil 40 zum Befestigen an der Halteeinrichtung 11 auf. Das Schaufelklauenteil 13 ist hierbei derart an dem Schaufelklauenprüfkörper 12 angeordnet, dass es von der Spanneinrichtung 24 bzw. von deren Spannbacken 26 und 27 beidseitig umgreifbar ist.

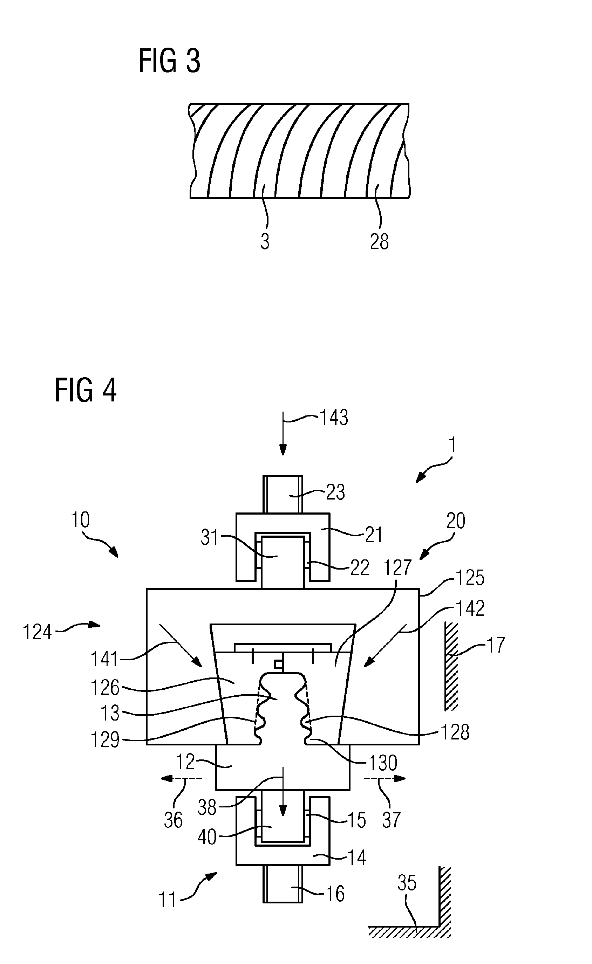

Gemäß der Darstellung nach den Figuren 2 und 3 ist beispielhaft ein Teil des bereits vorstehend erwähnten Rotorteils 2 einer Niederdruckturbine 41 dargestellt, wobei dieses Rotorteil 2 um eine hier nicht gezeigte Rotationsachse in Rotationsrichtung 42 umläuft. Am Rotorteil 2 sind eine Vielzahl an Schaufelfußaufnahmen 6 ausgeformt, welche durch Niederdruck-Schaufelklauenteile in Form der bereits erwähnten Schaufelklauenteile 3 umgrenzt sind. In diesen Schaufelfußaufnahmen 6 sind die Schaufelfüße 4 der Turbinenschaufeln 5 der Niederdruckturbine 41 an dem Rotorteil 2 festgelegt.

Bei dem in der Figur 3 gezeigten zweiten Ausführungsbeispiel ist die Prüfvorrichtung 1 lediglich mit einer alternativen Spanneinrichtung 124 ausgerüstet. Insofern sind die übrigen Komponenten mit identischen Bezugszeichen versehen und es werden nur diejenigen Bauteile und Funktionen beschrieben, welche zu dem in der Figur 1 gezeigten ersten Ausführungsbeispiel verschieden sind, um Wiederholungen zu vermeiden.

Die alternative Spanneinrichtung 124 weist zwei verlagerbare alternative Spannbacken 126 und 127 zum Einspannen des rotorseitigen Schaufelklauenteils 13 aus zwei aufeinander zuweisenden Richtungen 141 und 142 auf, wobei diese zwei alternativen Spannbacken 126 und 127 mit einer in axialer Richtung 143 axial zur Halteeinrichtung 11 verlaufenden Verlagerungskomponente verschieblich in der Spanneinrichtung 24 angeordnet sind. Insofern sind die zwei Spannbacken 126 und 127 beweglich an einer entsprechend ausgestalteten Spannbackenhalterung 125 gelagert. Die zwei alternativen Spannbacken 126 und 127 besitzen hierbei eine derartige Innenkontur 129 (nur exemplarisch beziffert), dass der hierdurch entstehende Aufnahmeraum 128 insgesamt eine Teilverzahnung 130 ausgestaltet, welche zumindest teilweise komplementär zu dem tannenbaumartigen Schaufelfuß 4 ist. Hierdurch kann das Schaufelklauenteil 13 besonders fest in dem Aufnahmeraum 128 geklemmt werden.

Obwohl die Erfindung im Detail durch die bevorzugten Ausführungsbeispiele näher illustriert und beschrieben wurde, so ist die Erfindung nicht durch diese offenbarten Ausführungsbeispiele eingeschränkt, und andere Variationen können vom Fachmann hieraus abgeleitet werden, ohne den Schutzumfang der Erfindung zu verlassen.

## Patentansprüche

1. Prüfvorrichtung (1) zum Ermitteln einer Materialermüdung bezüglich rotorseitiger Schaufelklauenteile (3) zum Festlegen eines Schaufelfußes (4) einer Turbinenschaufel (5) mit einer Versuchsanordnung (10), welche eine Halteeinrichtung (11) zum Haltern eines Schaufelklauenprüfkörpers (12) mit einem rotorseitigen Schaufelklauenteil (13), und welche Mittel (20) zum Simulieren eines Schaufelfußes (4) einer Turbinenschaufel (5) umfasst, und mit Mitteln (35) zum Erzeugen von simulierten Betriebsbelastungen (36, 37, 38), wobei die Mittel (35) zum Erzeugen von simulierten Betriebsbelastungen (36, 37, 38) mit der Halteeinrichtung (11) zum Haltern des Schaufelklauenprüfkörpers (12) derart wirkverbunden sind, dass die erzeugten simulierten Betriebsbelastungen (36, 37, 38) mittels der Halteeinrichtung (11) unter Umgehung der Mittel (20) zum Simulieren des Schaufelfußes (4) in die Versuchsanordnung (10) einleitbar sind.

2. Prüfvorrichtung (1) nach Anspruch 1,
wobei die Mittel (35) zum Erzeugen von simulierten Betriebsbelastungen (36, 37, 38) mit der Halteeinrichtung (11) zum Haltern des Schaufelklauenprüfkörpers (12) derart wirkverbunden sind, dass die erzeugten simulierten Betriebsbelastungen (36, 37, 38) mittels der Halteeinrichtung (11) unter Umgehung der Mittel (20) zum Simulieren des Schaufelfußes (4) unmittelbar in das rotorseitige Schaufelklauenteil (13) einleitbar sind.

3. Prüfvorrichtung (1) nach Anspruch 1 oder 2,
wobei die Mittel (35) zum Erzeugen von simulierten Betriebsbelastungen (36, 37, 38) eine Einrichtung zum Erzeugen von LCF-Betriebsbelastungen umfassen.

4. Prüfvorrichtung nach einem der Ansprüche 1 bis 3,
wobei die Mittel (35) zum Erzeugen von simulierten Betriebsbelastungen (36, 37, 38) eine Einrichtung zum Erzeugen von HCF-Betriebsbelastungen umfassen.

5. Prüfvorrichtung nach einem der Ansprüche 1 bis 4,
wobei die Mittel (35) zum Erzeugen von simulierten Betriebsbelastungen (36, 37, 38) eine Einrichtung zum Erzeugen von SCC-Betriebsbelastungen umfassen.

6. Prüfvorrichtung nach einem der Ansprüche 1 bis 5,
wobei die Mittel (35) zum Erzeugen von simulierten Betriebsbelastungen (36, 37, 38) eine Einrichtung zum Erzeugen von TMF-Betriebsbelastungen umfassen.

7. Prüfvorrichtung nach einem der Ansprüche 1 bis 6,
wobei die Mittel (35) zum Erzeugen von simulierten Betriebsbelastungen (36, 37, 38) eine Einrichtung zum Erzeugen von Kriechermüdungs-Betriebsbelastungen umfassen.

8. Prüfvorrichtung (1) nach einem der Ansprüche 1 bis 7,
wobei die Mittel (20) zum Simulieren eines Schaufelfußes (4) eine Spanneinrichtung (24; 124) zum beidseitigen Einspannen des an dem Schaufelklauenprüfkörper (12) ausgebildeten rotorseitigen Schaufelklauenteils (13) aufweisen.

9. Prüfvorrichtung (1) nach Anspruch 8,
wobei die Spanneinrichtung (24, 124) einen zumindest teilweise zu einer Schaufelklauenteilgeometrie komplementär ausgestalten Aufnahmeraum (27) mit einer zu einem tannenbaumartig ausgestalteten Schaufelfuß (4) komplementären Verzahnung (30; 130) aufweist.

10. Prüfvorrichtung (1) nach Anspruch 8 oder 9,
wobei die Spanneinrichtung (24; 124) zwei verlagerbare Spannbacken (126, 127) zum Einspannen des rotorseitigen Schaufelklauenteils (13) aus zwei aufeinander zuweisenden Richtungen (141, 142) aufweist.

11. Prüfvorrichtung (1) nach Anspruch 10,
wobei die zwei Spannbacken (126, 127) in einer Spannbackenhalterung (125) verlagerbar angeordnet sind.

12. Prüfvorrichtung (1) nach Anspruch 10 oder 11,
wobei die zwei Spannbacken (126, 127) mit einer axial zur Halteeinrichtung (11) verlaufenden Verlagerungskomponente in der Spanneinrichtung (124) angeordnet sind.

13. Schaufelklauenprüfkörper (12) mit einem Schaufelklauenteil (13) und mit einem Befestigungsteil (40) zum Befestigen an einer Halteeinrichtung (11) einer Versuchsanordnung (10) einer Prüfvorrichtung (1) zum Ermitteln einer Materialermüdung,
wobei das Schaufelklauenteil (13) derart an dem Schaufelklauenprüfkörper (12) angeordnet ist, dass das Schaufelklauenteil (13) von einer Spanneinrichtung (24; 124) der Prüfvorrichtung (1) umgreifbar ist.

14. Prüfverfahren zum Ermitteln einer Materialermüdung bezüglich rotorseitiger Schaufelklauenteile (3) zum Festlegen eines Schaufelfußes (4) einer Turbinenschaufel (5), bei welchem eine Versuchsanordnung (10) bestehend aus einer Halteeinrichtung (11) zum Haltern eines Schaufelklauenprüfkörpers (12) mit einem rotorseitigen Schaufelklauenteil (13), und bestehend aus Mitteln (20) zum Simulieren eines Schaufelfußes (4) einer Turbinenschaufel (5) mit simulierten Betriebsbelastungen (36, 37, 38) beaufschlagt wird, wobei diese simulierten Betriebsbelastungen (36, 37, 38) in die Halteeinrichtung (11) zum Haltern des Schaufelklauenprüfkörpers (12) unter Umgehung der Mittel (20) zum Simulieren des Schaufelfußes (4) unmittelbar eingeleitet werden.

15. Prüfverfahren nach Anspruch 14,
wobei in die Halteeinrichtung (11) zum Haltern des Schaufelklauenprüfkörpers (12) simulierte LCF, HCF, SCC, TMF und/oder Kriechermüdungs-Betriebsbelastungen (36, 37, 38) eingeleitet werden, um diesbezügliche Lebensdauern von rotorseitigen Schaufelklauenteilen (3) zu ermitteln.

16. Prüfverfahren nach Anspruch 14 oder 15,
wobei die Materialermüdung an einem Schaufelklauenprüfkörper (12) mit einem Niederdruck-Schaufelklauenteil einer Niederdruckturbine (41) ermittelt wird.

17. Prüfverfahren nach einem der Ansprüche 14 bis 16, wobei die Materialermüdung mittels unterschiedlicher Umgebungsmedien und/oder mittels unterschiedlicher Prüftemperaturen hinsichtlich der Umgebungsmedien und/oder hinsichtlich des Schaufelklauenprüfkörpers (12) ermittelt wird.
